# EUROPEAN PATENT SPECIFICATION

(11) **EP 4 581 904 B1**
(45) Date of publication and mention of the grant of the patent: **17.06.2026**
(21) Application number: 23764401.8
(22) Date of filing: 28.08.2023
(51) Int. Cl.: H05B 6/10

(54) **MAGNETIC INDUCTION FURNACE WITH IMPROVED HEATING EFFICIENCY**
MAGNETINDUKTIONSOFEN MIT VERBESSERTER HEIZEFFIZIENZ
FOUR À INDUCTION MAGNÉTIQUE AVEC UNE MEILLEURE EFFICACITÉ DE CHAUFFAGE

(30) Priority: 30.08.2022 IT 202200017790
(43) Date of publication of application: 09.07.2025
(73) Proprietor: Presezzi Extrusion S.p.A., 20871 Vimercate (MB) (IT)
(72) Inventor: BONIFACIO, Mario, 28832 Belgirate (VB) (IT); PRESEZZI, Valerio, 6900 Lugano (CH)
(74) Representative: Ripamonti, Enrico
(86) International application number: PCT/IB2023/058471
(87) International publication number: WO 2024/047501

(56) References cited:
- KR-A- 20190 006 782
- KR-A- 20210 045 679
- US-B2- 10 462 855

## Description

Forming an object of the present invention is a magnetic induction furnace adapted to heat at least one solid or tubular metal billet, of various lengths and diameters made of non-ferrous materials, for example to be extruded, according to the preamble of the main claim. Such preamble is reported in KR 2019 0006782.

A such magnetic induction furnace exploits the known physical principle according to which by introducing a ferromagnetic or paramagnetic or diamagnetic or a conductor metal body into a magnetic field, in such body there are generated parasitic currents which lead to the heating of the metal body due to the Joule effect.

This physical principle is used for heating metal billets with the aim of making them more pliable and therefore more malleable for example for a subsequent extrusion operation, or a subsequent step of a thermal treatment process.

Various solutions which exploit such physical principle are known. For example, WO2010/100082 discloses a device or furnace for heating metal objects or billets through electromagnetic induction comprising an electric stator adapted to move at least one rotor inside permanent magnets of the ring type and into which there is positioned said object, for example cylindrical-shaped. Such rotor generates a parasitic current in the metal object so as to heat it so as to obtain a desired distribution or temperature profile along the longitudinal axis thereof. This, so as to differentiate the heating of said object or billet so as to have a subsequent uniform extrusion thereof.

However, in WO2010/100082, each billet or metal object is subjected to movement during the heating thereof, said movement possibly rotating around the axis thereof and/or longitudinal along such axis. This with the aim of obtaining uniform temperature distribution along the aforementioned axis, between the ends of the billet. This necessarily requires having means suitable to rotate and/or generate such axial movement of the billet, this complicating the manufacturing of the furnace and increasing the costs thereof.

In addition, in the support structure of the billet there may be vibrations due to the manufacturing tolerances of the billet which determine the need to create means adapted to absorb such vibrations with ensuing greater complexity of the structure.

In addition, the axial movement of the billet into and out of the furnace or - in any case - with the possibility of projecting therefrom during the displacement entails a continuous heating and subsequent cooling of the end of the billet (with considerable waste of energy), while the central part - always submerged in the variable or rotary magnetic field of the furnace - has temperatures that are high or greater than those of the ends. This negatively affects the extrusion operation to which the billet is subsequently subjected such that it cannot be used for such operation.

In addition, the means movably supporting the billet during the movement are also subjected to heating that could damage them over time.

Another known solution is described in US2010/147833. This prior art document provides for an apparatus for heating a billet or workpiece being processed by magnetic induction. It provides for the presence of a first annular magnetic unit, rotating around the billet or workpiece being processed, inserted (coaxially) into a second annular magnetic unit. The first magnetic unit is contained in a concentric (thermal) insulation element given that the first magnetic unit uses iron cores around which there are provided for windings of high temperature super conductors or HTSC which have a transition temperature above 77K (that is approximately - 196°C).

This solution entails the need to cool the first magnetic unit, proximal to the workpiece to be heated, and this operation is very difficult both because such unit is inside the heating apparatus (and therefore difficult to achieve) and because such unit is proximal to an element being heated.

In addition, the HTSC windings must however be power-supplied or energised and this operation is difficult to carry out in the light of the position of the first magnetic unit inside the apparatus.

Furthermore, specifically due to the use of HTSC, the cavity in which they are arranged (defined by the insulation elements) is subjected to vacuum and this entails very high implementation difficulties.

Generally, the known solution entails a low efficiency in the light of the need to cool the HTSC windings and generate the vacuum for the insulation thereof.

Besides the above there should also be observed the fact that, in the prior art apparatus, the workpiece to be heated is movable with respect to the apparatus and - in any case - it is not entirely contained in the latter (and it should therefore be movable): therefore, the heating of the aforementioned workpiece occurs by sections, but it cannot be obtained and subjected to maintenance operations evenly; this given that, when a part of such workpiece heats, another part (outside the apparatus) cools.

This also reduces the efficiency of the prior art solution.

US2010/147834 also discloses the use of windings which can be a superconductor (with the same disadvantages described above relating to US2010/147833) and which should in any case be power-supplied to create the magnetic field useful for heating the billet being processed.

Therefore, also in this case, there is a significant energy consumption used for heating the billet mostly due to the need to cool the superconductor windings and always keep them at very low temperatures in order to maintain the superconductor effect.

In addition, US2010/147834 discloses that the workpiece to be heated or billet rotates, and this could also cause a deformation of the ends of the billet supported by gripping members, and which can negatively affect the subsequent extrusion operation.

An object of the present invention is to provide a magnetic induction furnace for heating solid or tubular metal billets measuring any length, cross-section or diameter, made of non-ferrous materials (such as for example aluminium and aluminium alloys) for example to be subjected to extrusion or to subsequent thermal treatments, which is improved with respect to the prior art furnaces and which has an improved efficiency with respect to prior art furnaces.

In particular, an object of the invention is to provide a furnace of the type mentioned above which allows to have a magnetic flux which impacts a billet arranged therein having penetration capacity that is greater than the one found in similar prior art furnaces.

Another object is to provide a furnace in which the billet can be heated at the desired temperature evenly over the entire length thereof and cross-section, reducing thermal dissipations to the minimum.

A further object is to provide a furnace of the type mentioned above in which the magnetic flux which can exit towards the external thereof is smaller with respect to similar prior art furnaces.

These and other objects which shall be more apparent to the man skilled in the art are attained by furnace according to the main claim.

For a better understanding of the present invention, the following drawings are attached hereto, purely by way of non-limiting example, wherein:
figure 1 shows a perspective view of a system for heating metal billets which uses furnaces with magnetic sections according to the invention, arranged consecutively and with horizontal longitudinal axes with respect to a support a support of the system;
figure 2 shows a perspective view of magnetic induction furnace according to the invention;
figure 3 shows a cross-sectional view according to line 3-3 of figure 2;
figure 4 shows a partially exploded perspective view of the section of figure 2;
figure 5 shows a perspective view with further exploded parts of figure 2;

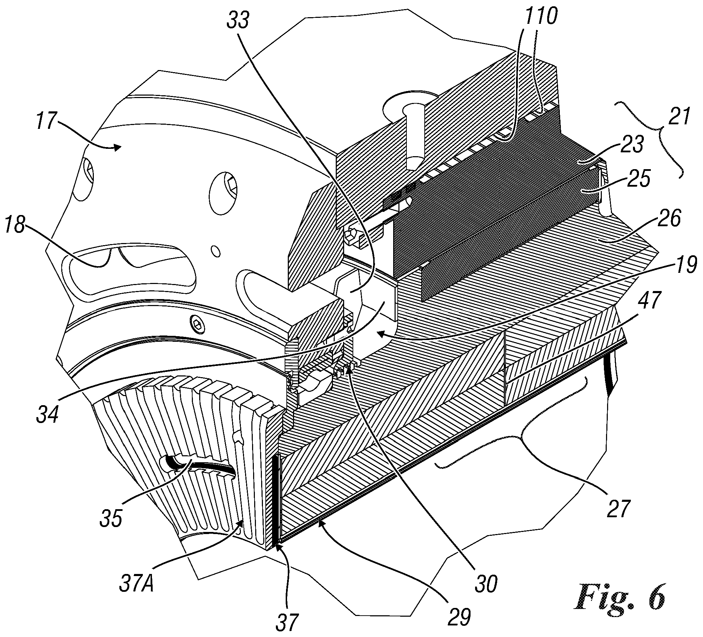

figure 6 shows an enlarged view of the detail indicated with A in figure 3;
figure 7 shows a longitudinal cross-sectional view of a component of the furnace of figure 2;
figure 8 shows a cross-sectional view according to line 8-8 of figure 7;
figure 9 shows a perspective view of a part of the component of figure 7; and
figure 10 shows an enlarged view of the detail indicated with E in figure 1.

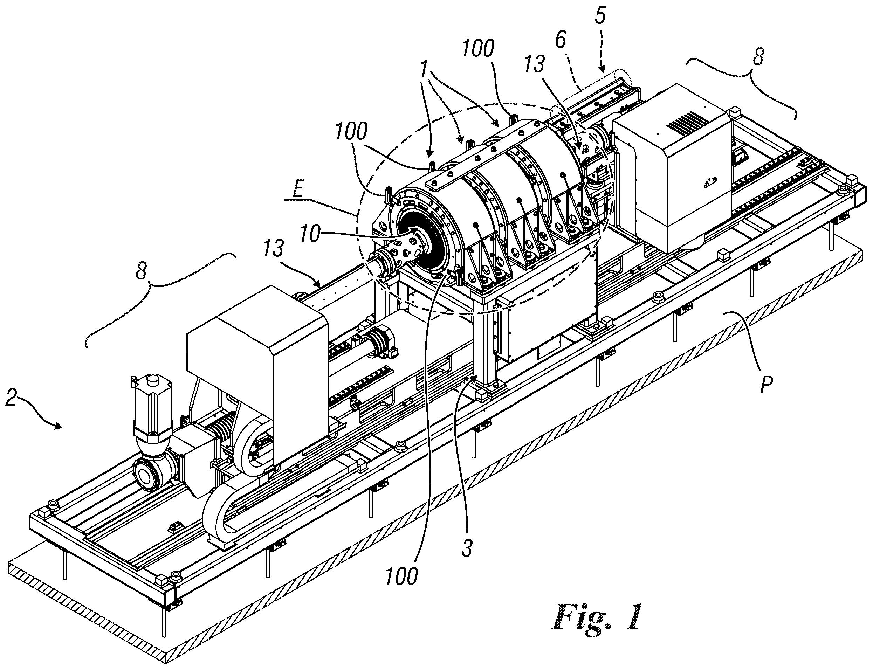

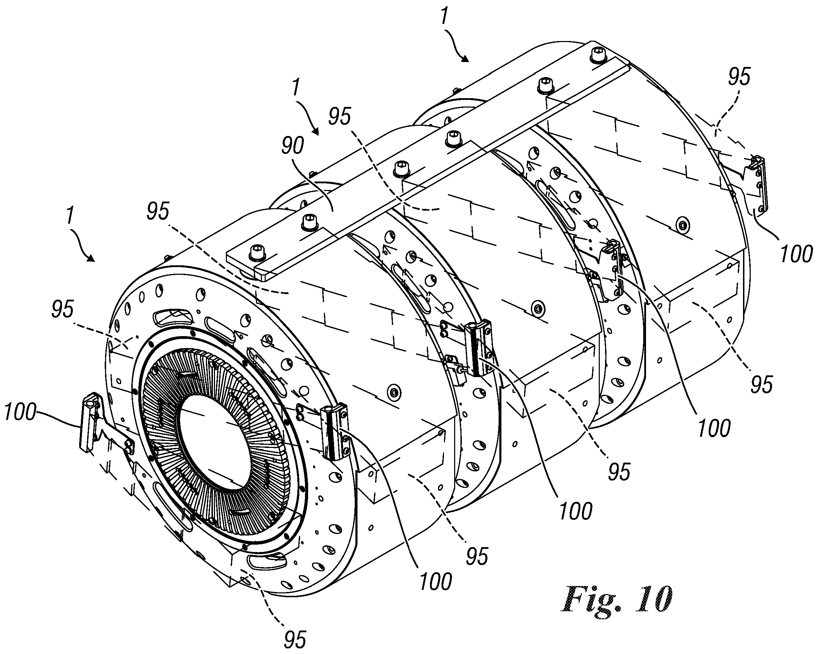

With reference to the aforementioned figures, a furnace according to the invention is generally indicated with 1. Figure 1 shows a system 2 comprising three magnetic induction furnaces 1 arranged adjacent and consecutively with respect to each other, fixed to each other (also see figure 10 which shows an elongated flat body 90 which constrains the furnaces 1) and supported by a fixed structure 3.

Obviously, the system 2 may also provide for only one furnace 1 or a plurality of induction furnaces which may also be more than three.

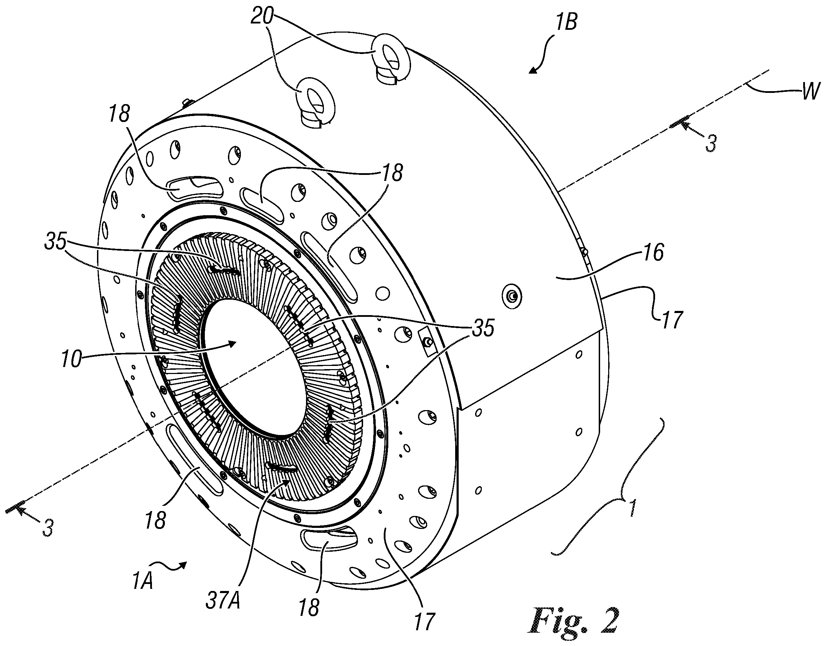

Without this limiting the invention, such furnaces 1 are arranged with longitudinal axis W (see figure 2) that is horizontal or parallel to a plane or support P on which the system 2 lies.

In a different embodiment of the system 2, one or more furnaces 1 may be arranged with longitudinal axis W that is vertical or perpendicular to the plane P. Such furnaces may be superimposed or arranged adjacent to each other. Even this solution of at least one furnace with vertical axis W is to be considered comprised in the present invention.

Figure 10 shows, enlarged with respect to figure 1, only the magnetic induction furnaces 1.

Each furnace 1 is adapted to heat - by magnetic induction - a body 5 (by way of non-limiting example, an aluminium alloy billet) having a cylindrical body 6 (solid or hollow or tubular and of any cross-section). In a known manner, through common components 8 of the system 2 (which will not be described further hereinafter), such body or billet 5 is adapted to be positioned, in a part or cavity 10 of such furnace, at said cavity 10 there being provided for means adapted to generate, by magnetic induction, a radial rotating magnetic field and with variable intensity around the billet so as to create - in the latter - parasitic currents that cause the heating thereof up to a desired temperature, for example around 500°C (in the case of aluminium alloys to be extruded) or greater (in the exemplifying cases of other non-ferrous materials such as copper, bronze, brass, silver, magnesium, titanium, or the alloy known by the name cupronickel, etc.).

The radial magnetic field generated a furnace according to the invention, contrary to the longitudinal one that is usually generated in the prior art induction furnaces, enables to have a more homogeneous and better heating of the billet with respect to what can be obtained with the current prior art solutions; in particular, it enables to obtain a heating of the billet 5 such that the outer temperature (superficial) of the latter differs very slightly with respect to the internal temperature thereof (core).

The cavity 10 of each furnace 1 is adapted to contain the billet 5 during the heating thereof without the latter being subjected to any rotary movement around the longitudinal axis thereof when in such cavity 10 there is generated the magnetic field for heating the billet by induction. Therefore, with regard to the rotation around the longitudinal axis thereof, the latter is in an absolutely fixed and stationary position (with horizontal or vertical axis) in such cavity 10 during the heating thereof being supported by known members carrying axially movable 13 (which lock the rotation thereof).

More particularly, the furnace 1 comprises a body or tubular cylindrical and tubular 16 integrally joined with the fixed structure 3 of the system 2. The tubular cylindrical and tubular 16 is closed - on two opposite sides 1A, 1B of the furnace 1 - by annular outer flanges 17 having openings 18 for the dispersion of the heat which is generated in the furnace. On the carcass there are rings 20 for the movement thereof.

The tubular outer carcass 16 comprises two inner annular cavities 19 (placed in communication with the openings 18) separated by a high-efficiency electric motor for example synchronous 21 (up to 97%), power-supplied by an inverter of the system 2 (not shown in the figures).

In particular, the synchronous electric motor comprises an electric stator 23 integrally joined with the tubular carcass 16.

In such stator, there is adapted to rotate, around the longitudinal axis W, an annular electric rotor 25, provided with permanent magnets if synchronous or with reluctance, to which there is integrally joined a rotor body or support 26, cylindrical or tubular, supporting a plurality of permanent magnets 27 which delimit the cavity 10 into which the billet 5 is adapted to be introduced for the heating thereof, supported by the load-bearing members 13 of the system 2. The electric rotor 25 is arranged on a portion of the rotor body or support 26 which has part of the outer surface thereof facing towards the cavities 19 mentioned above.

In the cavity 10, facing the permanent magnets 27 and between them and the billet 5 when it is introduced into the furnace 1, there is preferably present a cylindrical tubular body 29 at least partly made of ceramic material, adapted to act as a screen for the heat irradiated by the billet 5 when subjected to the magnetic flux generated by the permanent magnets 27 carried by the rotor body or support 26 rotating around the axis W. The cylindrical body or heat screen 29 allows to create a barrier against the heat coming from the billet 5, protecting and isolating the permanent magnets 27 from the thermal irradiation of the billet; such body 29 has a further object of protecting the magnets from any impacts or foreign bodies that might penetrate into the cavity 10.

Such body or heat screen 29 can be replaced and it can be slipped off or removed from the cavity 10 when it needs to be replaced because it is damaged, dirty or because it has lost its insulating properties over time and due to use. Such body of screen can be completely made of ceramic material or refractory material or it may comprise a metal support coated internally (that is towards the cavity 10) or on both opposite cylindrical surfaces (inner and outer) made of ceramic or refractory material.

On the surface of the rotor body or support 26 there are present ribs or fins 30 also having the purpose of externally cooling such body 26 through an airflow coming from the openings 18. Such ribs or fins 30 are housed in the two cavities 19 mentioned further above.

In order to cool the body 26 (and therefore the magnets and the furnace as a whole) there are provided for fans or mechanical ventilation devices 100 on the tubular carcass 16 (see figure 1 and figure 10) which direct air blades to the lateral surface of such carcass being careful not to impact the cavity 10 with such air. The air flows or blades generated by the fans 100 are shown with dashed line in figure 10 and indicated with 95.

In order to cool the furnace 1, between the stator 23 and the carcass 16 there is present a circulation of a fluid (for example water or glycol) adapted to cool both the tubular carcass 16 and he stator 23 or the electric motor 21 of the furnace, said "refrigerant" fluid circulating in the furnace 1 through ducts 31A, 31B which open to the external of the carcass 16. Such fluid circulates in grooves 110 present between said stator and the tubular carcass 16 only at such stator, entering from a first duct 31A and exiting from the other 31B after flowing through the entire outer surface of the stator 23. For example, the grooves are arranged in a helical fashion around the stator to obtain such circulation.

In order to increase and move the air flow present between the rotor and the stator, a plurality of air fins 33 is also associated with the rotor. In particular, such air fins 33 are fixed to a support element 34 (for example an annular sector) fitted onto the rotor body 26 and fixed to the latter in any known manner. Obviously, the air fins 33 may be associated with the rotor body 26 in another manner or it can be obtained directly thereon.

Furthermore, at the outer flanges 17 there are present, associated with the rotor 25, of the annular bodies or annular flat strips 37 which are arranged laterally opposite (towards the side 1A and 1B of the furnace 1) to the plurality of permanent magnets 27 so as to avoid and reduce the protrusion of magnetic field lines from the opposite sides 1A and 1B of the furnace 1. Such protrusion is due to the particular conformation of the rotor body 26 or rather to the particular arrangement of the permanent magnets 27 adapted to generate a magnetic flux in the cavity 10 which penates as much as possible into said cavity so as to reach deep into the body 6 of the billet 5 present in such cavity. Furthermore, such strips 37 carry, by conduction, the heat towards the external of the furnace 1 and in particular on the finned annular bodies 37A outside the furnace and proximal to the flanges 17, so that the heat can be removed from the air blades 95 generated by the fans 100 which touch such finned bodies 37A. This allows to keep the temperature of the permanent magnets 27 at a relatively low level so as to ensure effectiveness in terms of generating the magnetic field.

The finned annular bodies and the strips 37 also have through openings 35 and 35A, respectively.

Flow diverters can be provided for at such openings 35.

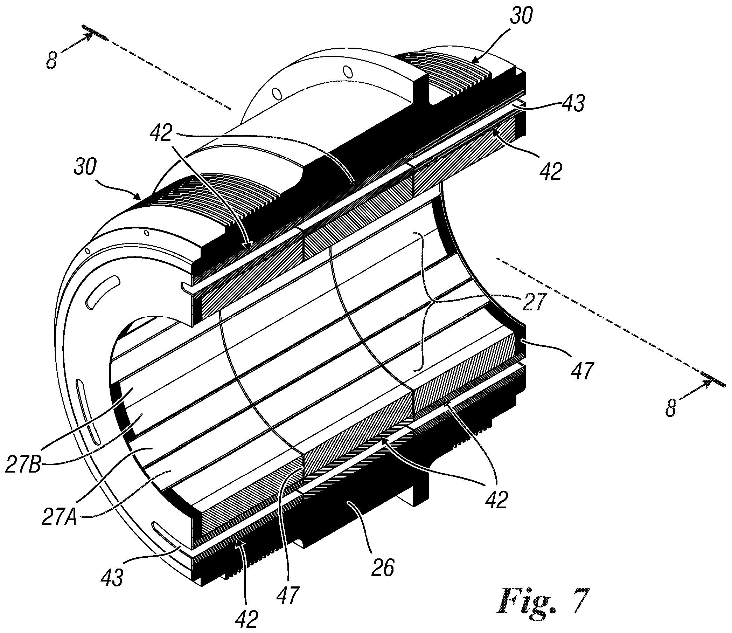

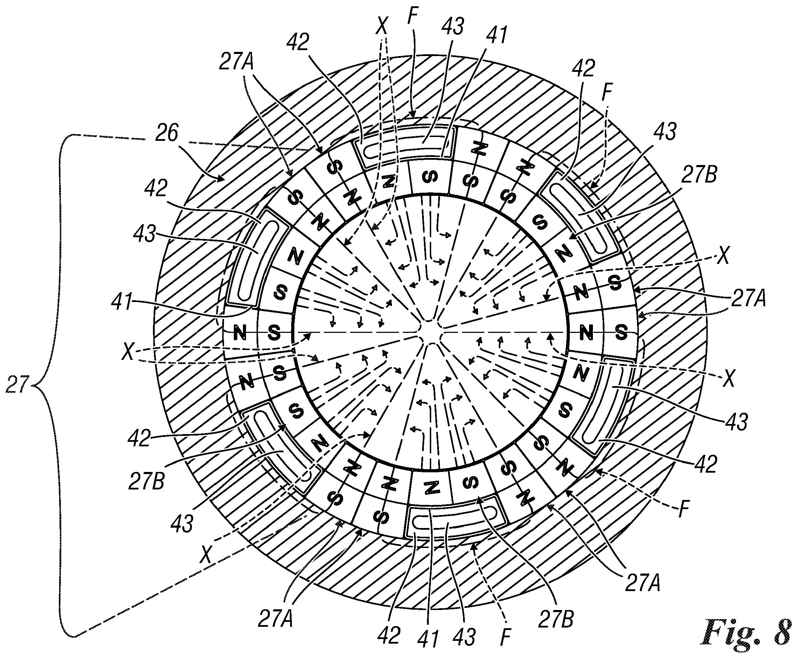

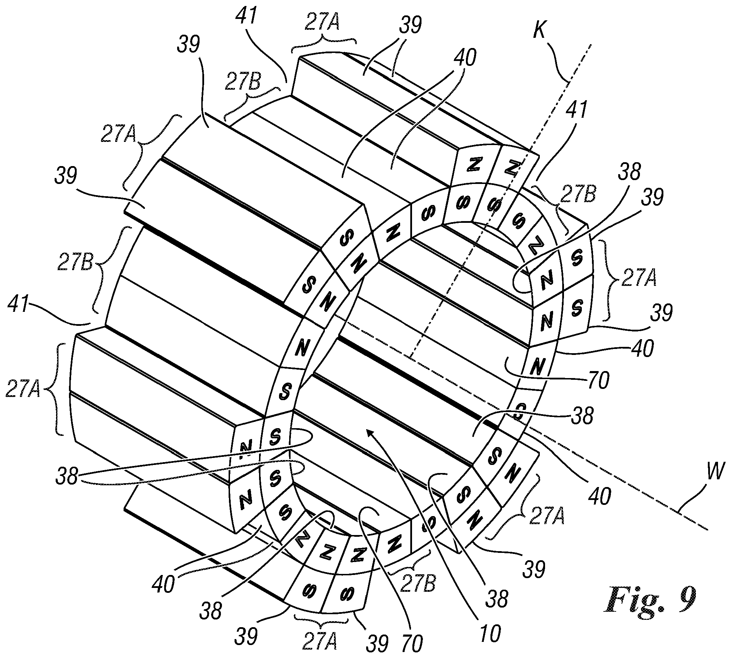

The permanent magnets 27 of the rotor body 26 may be divided into two groups, which are alternated with respect to each other, depending on the arrangement thereof: a first group of permanent magnets (or "main permanent magnets" indicated in their entirety with 27A in figures 7, 8 and 9) are magnetised (that is they have a relative position of the poles N and S or polar axis) with a radial arrangement along the rotor body or support 26 or they are arranged with an axis K (see figure 9), which reaches the North and South poles (N and S), arranged on a radius of a transversal flat section (as in figure 8) of the tubular cylindrical body or support 26; a second group of permanent magnets (or "auxiliary permanent magnets" indicated with 27B in figures 8 and 9) instead comprises magnets which are magnetised with an axial arrangement along the rotor. The main permanent magnets 27A have poles N and S superimposed radially (along the axis K), while the auxiliary permanent magnets 27B have the poles N and S arranged adjacent to each other along the longitudinal axis of the rotor body or tubular support 26 on each circular crown in which such plurality of permanent magnets (each provided with their poles N and S) is partitioned by a plane orthogonal to the longitudinal axis W (as in figure 8).

In other words, in the case of the auxiliary permanent magnets 27B, the fact that they have an "axial arrangement" indicates that they are magnetised, or they have the poles N and S or the polar axes arranged circumferentially around the cavity 10 of the furnace. In other words, the poles N and S are arranged along a circumference around such cavity (the polar axes are therefore orthogonal to the radii of such circumference). They are intervalled by the main permanent magnets 27A which have the inner end part (or first end 38) facing towards the internal of the cavity 10 and preferably conformed, like a curved surface (or tile-shaped) so as to be consecutive to the auxiliary permanent magnets 27B (curved or tile-shaped) having corresponding first internal ends 70, arranged circumferentially around the cavity 10. In this manner, the main permanent magnets 27A and the auxiliary permanent magnets 27B define or at least delimit the cavity (cylindrical) 10.

Obviously, the aforementioned shape of the permanent magnets is not compulsory, given that the latter can also be parallelepiped-shaped.

The main permanent magnets 27A define poles of the rotor body 26 and they can be equal to or greater than two.

It should be observed that the main permanent magnets 27A, of the first group of magnets, have a "segment-shaped" cross-section or circular section (see figures 8 and 9). Such main permanent magnets 27A may be made as a single piece or as a plurality of magnetic elements arranged adjacent to each other: for example, figures 8 and 9 show the main magnets obtained by two magnetic "segments" arranged adjacent to each other by pairs along the cavity 10. This so as to facilitate the assembly thereof and improve the efficiency of the radial force lines of the magnetic field generated by such main magnets 27A.

Obviously, each segment may also not have curved surfaces, but it may have a polygonal cross-section such as a trapezium, square-shaped or rectangular. However, also in this case it will be indicated as "segment" in the present document.

The main permanent magnets are spaced with an (external) end thereof (surface) (or a second end) 39 from the corresponding external ends (second ends 40) of the auxiliary permanent magnets 27B. Each second end 39 of the main permanent magnets ends at the rotor body or support 26 and rests thereon; the second end 40 of the second permanent magnets, instead, is spaced from such rotor body 26 and therewith such second end forms a cavity 41 into which there is inserted a compensator element 42 made of thermally conductive material, made of nonmagnetic material (for example aluminium) which fills said cavity totally. Each compensator element 42 has a longitudinal groove 43 (that is arranged parallel to the longitudinal axis W of the rotor body or support 26 and of the furnace 1) which acts as a groove, with a smooth or finned inner surface, for a further cooling of the plurality of permanent magnets 27, said groove opening at the terminal ends thereof at the opposite sides 1A and 1B of the furnace and at the openings 35 of the finned bodies 37A. As mentioned, the flanges 17 and the finned bodies 37A allow the heat generated in the billet 5 when it is inside the furnace 1 and which heats the magnets 27, to be removed from the air generated from the fans 100 and which touches such flanges and finned bodies. Any deflectors present at the openings 35 can improve the through-flow of the air and into the grooves 43.

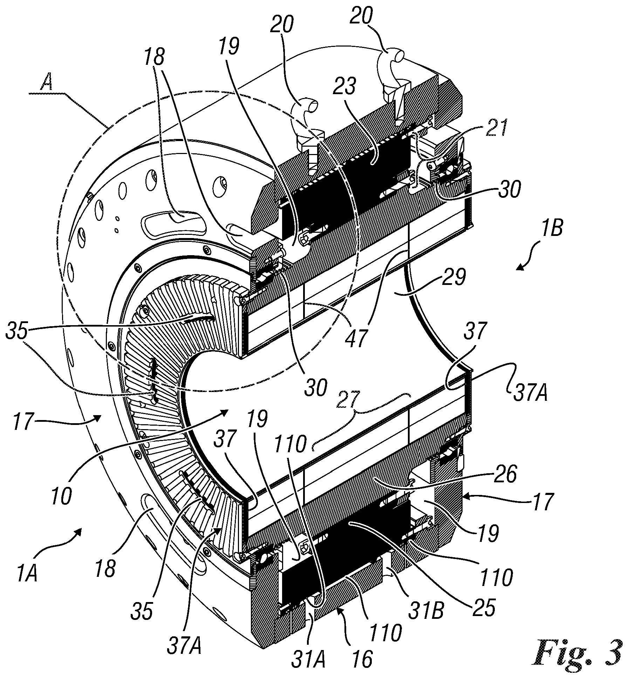

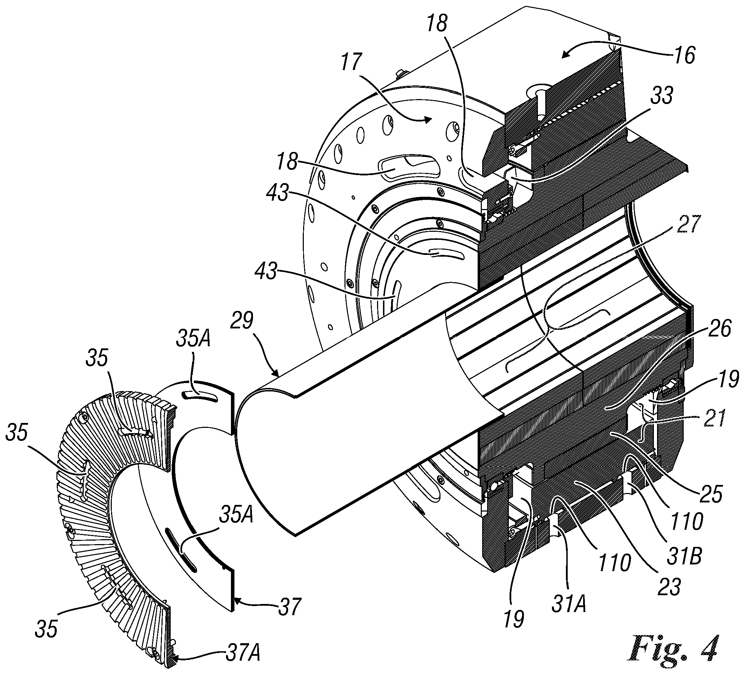

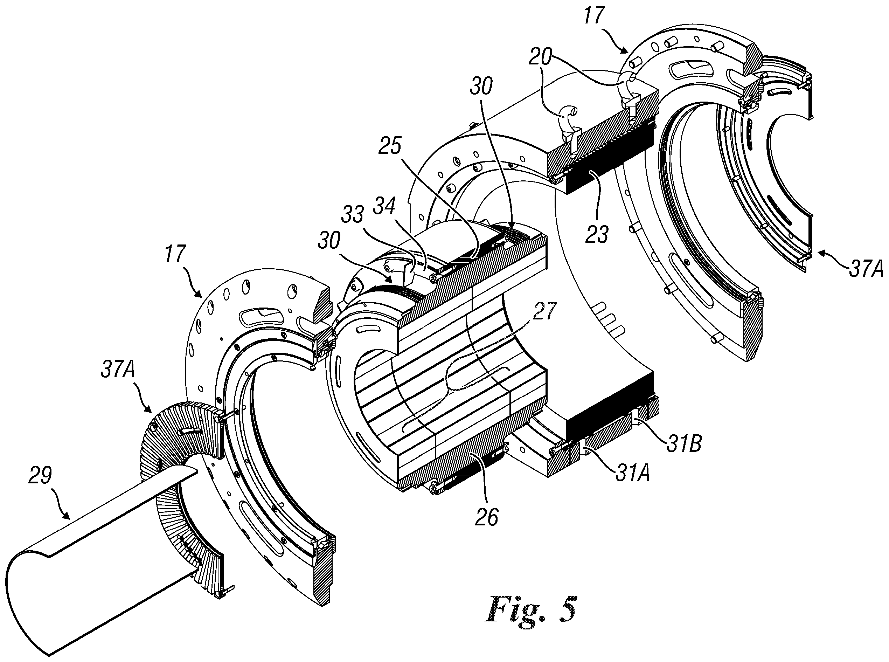

The cavity 10 may be delimited by only one plurality of magnets 27 arranged on only one circumference delimiting the cavity. Or, as shown in the figures, various pluralities of permanent magnets 27 (for example three, in figures 3, **4****,** **5** and 7), arranged adjacent to each other and magnetically phased with respect to each other, are arranged in an annular fashion (defining three circumferences arranged adjacent to each other and delimiting the cavity 10) in the rotor body or tubular support 26. This allows to facilitate the assembly of the "magnetic portion" (defined by said plurality of permanent magnets) of the furnace 1. In order to further facilitate such assembly, between each plurality of magnets 27 and the adjacent one/ones there is arranged an annular separator 47 lying on a plane orthogonal to the axis W of the rotor.

Furthermore, thanks to the magnetic phasing (that is the alternation of magnetic polarities of each plurality of magnets as shown in Figure 8), which creates a continuity of the magnetic polarities along the longitudinal axis of the furnace, of the cavity 10, all the various pluralities of permanent magnets behave as if they were a single piece (along such longitudinal axis).

Thanks to the particular arrangement of the polarities of the magnets (see figure 8) there is obtained, in the cavity 10, a magnetic flux which enters deeper into the billet arranged in the furnace with respect to the prior art solutions which use magnetic fluxes for heating the billets, generated by rotary permanent magnets. As a matter of fact, as schematically shown in figure 8, the magnetic field of the main permanent magnets 27A (defined by the flow lines X in figure 8) is capable of penetrating into the inner parts of the body 6 of the billet 5 arranged in te furnace.

Given that the auxiliary magnets 27B have magnetic poles adjacent to the magnetic poles identical to those of the main permanent magnet 27A, and given that the main magnetic poles are polarised at 90° with respect to the auxiliary ones, there is obtained an "extension" and intensification of the force lines of the magnetic field generated by the main permanent magnets 27A towards the internal of the billet 5 (see figure 8). The magnetic field (flow lines X) generated by the main permanent magnets 27A penetrates deep into the cavity 10 reaching the interior, and deep, parts or the body 6 of the billet 5 so as to further heat the latter with respect to the prior art solutions, even therein. At the same time, there is obtained a (significant) decrease in the magnetic field which penetrates into the rotor body or tubular support 26.

Another advantage of this solution lies in the fact that the rotor body or tubular support 26 may have a smaller thickness with respect to similar solutions having only magnets all of which are arranged like the main permanent magnets 27A given that the effect on the magnetic field generated by the main permanent magnets caused by the auxiliary permanent magnets 27B, displaces such magnetic field towards the internal of the cavity 10 more than it interests the body or tubular support 26 (see dashes in figure 8). This allows to obtain a ratio between the magnetic flux generated towards the internal of the furnace 1 with respect to the one that closes towards the external (that is towards the support 26 of the magnets 27) by about 70%-75% to 30%-25% (that is - towards the internal - there is generated a magnetic flux equal to more than twice the one that closes in the tubular support 26). Furthermore, it should be observed that the magnetic flux generated by the magnets 27 towards the external of the furnace closes in the tubular support 26 (see flow lines F in figure 8) and it does not interfere with the one present in the electric rotor 25 of the electric motor 1 whose magnetic field, in turn, closes therein.

This also allows to reduce the thickness and therefore the diameter, the mass, the inertia and the costs of such rotor body or tubular support 26.

Besides this, the presence of the strips 37 allows, together with the presence of surface ribs 30 and the fins 33, an optimal cooling of the rotor during the rotation thereof around the axis W when heating the billet 5. In addition, it should be observed that such strips 37 create an optimal axial barrier (that is towards the sides 1A and 1B of the furnace 1) to the rotary magnetic field generated by the permanent magnets 27 when using the furnace, the rotation being obtained through the electric motor, for example synchronous, comprising the stator 23 and the rotor 25. Therefore, the invention attains advantages both in terms of heating the billet 5 and in particular in terms of the quality of such heating (thermalisation or temperature uniformity in each cross-section of such billet), in the time required to obtain an optimal heating of the billet (which reduces with respect to the times of the prior art solutions resulting in a higher hourly production rate) and in terms of safety for the people and goods near the furnace 1 in the system 2. All this being due to the fact that all the emitted magnetic fields remain confined in the furnace.

In an alternative embodiment, the electric motor 21 may be of the any known asynchronous type: for example, it may provide for a squirrel-cage rotor or it may be of the reluctance type.

Obviously, in the light of the description above, the person skilled in the art may find solutions equivalent to those described in the present document so as to obtain a magnetic induction furnace used for heating metal billets according to the characteristics defined by the claims that follow.

## Claims

1. Magnetic induction furnace (1) adapted to solid or tubular heat metal billets (5) made of non-ferrous materials to be extruded, said furnace (1) comprising a fixed body or cylindrical and tubular carcass (16) containing an electric motor (21) having a fixed electric stator (23) and an annular rotor (25) movable in rotation around a longitudinal axis (W) thereof in said stator (23) and in said fixed body (16), said annular rotor (25) being integrally joined with a rotor body or tubular support (26) supporting a plurality of permanent magnets (27) arranged so as to define a cavity (10) of the furnace (1) having a longitudinal axis coincident with the rotation axis (W) of the rotor and adapted to contain at least one billet (5) to be heated, by magnetic induction, by rotating the annular rotor and the joined rotor body (26), a rotation around a longitudinal axis thereof of said billet (5) being fully prevented when the billet is inserted into the aforementioned cavity (10), the billet (5) remaining in this condition during the entire heating operation, the plurality of permanent magnets (27) of the rotor body (26) comprising main permanent magnets (27A) magnetised radially in the rotor body (26) and auxiliary permanent magnets (27B) magnetised axially around the cavity (10) of the rotor, said main and auxiliary permanent magnets (27A, 27B) alternating in said rotor body (26) around the cavity (10) of the furnace, **characterised in that** the main permanent magnets (27A) are polarised at 90° with respect to the polarisation of the auxiliary permanent magnets (27B), identical poles of said main permanent magnets (27A) and of said auxiliary permanent magnets (27B) facing towards said cavity (10) of the furnace being arranged adjacently, said main permanent magnets (27A) forming segment portions or with circular section around said cavity (10) of the furnace, said permanent magnets having a first inner end part (38) facing towards the cavity (10) of the furnace consecutive to a corresponding first inner end part (70) of the auxiliary permanent magnets (27B), a second outer end part (39) of the main permanent magnets (27A) resting on said rotor body (26), the corresponding said outer end part (40) of the auxiliary permanent magnets (27B) being distant from such rotor body (26), a cavity (41) being present between said rotor body (26) and the outer end part (40) of the auxiliary permanent magnets (27B).

2. Magnetic induction furnace according to claim 1, **characterised in that** each main permanent magnet (27A) is alternatively made of a single piece or comprises a plurality of coupled magnets.

3. Magnetic induction furnace according to claim 1, **characterised in that** said cavity (41) between the auxiliary permanent magnets (27B) and the rotor body (26) contains a compensator element (42) made of thermally conductive material.

4. Magnetic induction furnace according to claim 3, **characterised in that** each compensator element (42) has a longitudinal groove (43), the longitudinal grooves of all compensator elements (42) of the rotor body (26) opening outside such rotor body (26) at opposite sides (1A, 1B) of the induction furnace (1) at through openings (35) provided for in outer annular finned bodies (37A) of such furnace.

5. Magnetic induction furnace according to claim 4, **characterised in that** each longitudinal groove (43) if finned internally.

6. Magnetic induction furnace according to claim 1, **characterised in that** the permanent magnets (27) cooperate with strip assemblies (37) arranged on the sides thereof at the opposite sides (1A, 1B) of the furnace, said strips (37) closing the axial flow generated by the auxiliary permanent magnets (27B) and axially transferring - by conduction - the heat emitted by the totality of said permanent magnets (27) towards the finned annular bodies (37A) present on such opposite sides (1A, 1B) for dissipating heat outside the furnace (1).

7. Magnetic induction furnace according to claims 4 and 6, **characterised in that** said strips (37) have openings (35A) perfectly aligned with the longitudinal grooves (43) of the compensator elements and with the through openings (35) of the outer annular finned bodies (37A).

8. Magnetic induction furnace according to claims 1 and 7, **characterised in that** it comprises fans (100) externally associated with the fixed body (16) of the furnace adapted to generate an air flow blade which touches said finned bodies (37A), but not the cavity (10) of the furnace, said air penetrating into the openings (35, 35A) of said outer annular finned bodies (37A), of said strips(37) and in said longitudinal grooves (43) of the compensator elements (42).

9. Magnetic induction furnace according to claim 8, **characterised in that** at the openings (35) of the outer annular finned bodies (37A) there are present flow diverters adapted to direct said air into the longitudinal grooves (43).

10. Magnetic induction furnace according to claim 1, **characterised in that** at the first end parts (38, 70) of the main and auxiliary permanent magnets (27A, 27B) delimiting the inner cavity (10) of the furnace there is present a tubular cylindrical body (29) at least partly made of ceramic material adapted to act as a screen for the heat emitted by the billet (5) when such billet is subjected to the magnetic flux generated by the permanent magnets (27) of the rotor body (26) rotating around the longitudinal axis (W), said tubular cylindrical body (29) being removable and replaceable.

11. Magnetic induction furnace according to claim 1, **characterised in that** the electric rotor (25) is integrally joined with a circumferential portion of the rotor body (26), said rotor body (26) having, externally, ribs (30) for cooling cavities (19) present between them, the fixed body (16) of the furnace, the electric stator (23) and the electric rotor (25).

12. Magnetic induction furnace according to claim 11, **characterised in that** said rotor body (26) has - externally - a plurality of fins (33) in the cavities (19) between them and the fixed body (16) of the furnace, the stator (23) and the electric rotor (25), said fins being adapted to increase and move the air flow present in such cavities (19) towards the openings (18) provided for in flanges (17) arranged laterally on the fixed body (16) of the furnace.

13. Magnetic induction furnace according to claim 1, **characterised in that** the cavity (10) of the furnace (1) is defined by various pluralities of permanent magnets (27), each plurality of magnets delimiting a part of said cavity (10), said plurality of permanent magnets (27) being arranged longitudinally adjacent and being magnetically phased with respect to each other in said furnace (1), between two pluralities of longitudinally consecutive permanent magnets (27) of the pluralities of permanent magnets (27) there being present corresponding annular spacers (47) arranged on planes orthogonal to the longitudinal axis (W) of the rotor (25).

14. Magnetic induction furnace according to claim 1, **characterised in that** there is provided for a circulation of a refrigerant around the stator (23) of the electric motor (21) in the fixed body (16) of the furnace.

## Patentansprüche

1. Magnetischer Induktionsofen (1), der angepasst ist, um massive oder rohrförmige Metallknüppel (5) zu erhitzen, die aus Nichteisenwerkstoffen gefertigt sind, die extrudiert werden sollen, der Ofen (1) umfassend einen feststehenden Körper oder ein zylindrisches und rohrförmiges Gehäuse (16), das einen Elektromotor (21), der einen feststehenden elektrischen Stator (23) und einen ringförmigen Rotor (25), der um eine Längsachse (W) davon in dem Stator (23) und in dem feststehenden Körper (16) drehbar ist, aufweist, wobei der ringförmige Rotor (25) einstückig mit einem Rotorkörper oder einem rohrförmigen Träger (26) verbunden ist, der eine Vielzahl von Permanentmagneten (27) trägt, die angeordnet sind, um einen Hohlraum (10) des Ofens (1) zu definieren, der eine Längsachse aufweist, die mit der Drehachse (W) des Rotors zusammenfällt, und angepasst ist, um mindestens einen Knüppel (5) zu enthalten, der durch magnetische Induktion erhitzt werden soll, indem der ringförmige Rotor und der verbundene Rotorkörper (26) gedreht werden, wobei eine Drehung des Knüppels (5) um seine Längsachse vollständig verhindert ist, wenn der Knüppel in den vorgenannten Hohlraum (10) eingeführt ist, der Knüppel (5) während des gesamten Heizvorgangs in diesem Zustand bleibt, die Vielzahl von Permanentmagneten (27) des Rotorkörpers (26) umfassend Hauptpermanentmagnete (27A), die radial in dem Rotorkörper (26) magnetisiert sind, und Hilfspermanentmagnete (27B), die axial um den Hohlraum (10) des Rotors magnetisiert sind, wobei die Haupt- und Hilfspermanentmagnete (27A, 27B) abwechselnd in dem Rotorkörper (26) um den Hohlraum (10) des Ofens sind, **dadurch gekennzeichnet, dass** die Hauptpermanentmagnete (27A) um 90° in Bezug auf die Polarisierung der Hilfspermanentmagnete (27B) polarisiert sind, wobei identische Pole der Hauptpermanentmagnete (27A) und der Hilfspermanentmagnete (27B), die dem Hohlraum (10) des Ofens zugewandt sind, angrenzend angeordnet sind, die Hauptpermanentmagnete (27A) Segmentabschnitte oder mit kreisförmigem Querschnitt um den Hohlraum (10) des Ofens bilden, die Permanentmagnete ein erstes inneres Endteil (38) aufweisen, das dem Hohlraum (10) des Ofens zugewandt ist, das auf ein entsprechendes erstes inneres Endteil (70) der Hilfspermanentmagnete (27B) folgt, ein zweites äußeres Endteil (39) der Hauptpermanentmagneten (27A) auf dem Rotorkörper (26) aufliegt, das entsprechende äußere Endteil (40) der Hilfspermanentmagnete (27B) von diesem Rotorkörper (26) entfernt ist, ein Hohlraum (41) zwischen dem Rotorkörper (26) und dem äußeren Endteil (40) der Hilfspermanentmagnete (27B) vorhanden ist.

2. Magnetischer Induktionsofen nach Anspruch 1, **dadurch gekennzeichnet, dass** jeder Hauptpermanentmagnet (27A) alternativ aus einem einzigen Stück gefertigt ist oder eine Vielzahl von gekoppelten Magneten umfasst.

3. Magnetischer Induktionsofen nach Anspruch 1, **dadurch gekennzeichnet, dass** der Hohlraum (41) zwischen den Hilfspermanentmagneten (27B) und dem Rotorkörper (26) ein Ausgleichselement (42) aus wärmeleitendem Material enthält.

4. Magnetischer Induktionsofen nach Anspruch 3, **dadurch gekennzeichnet, dass** jedes Ausgleichselement (42) eine Längsnut (43) aufweist, wobei die Längsnuten aller Ausgleichselemente (42) des Rotorkörpers (26) nach außerhalb des Rotorkörpers (26) an gegenüberliegenden Seiten (1A, 1B) des Induktionsofens (1) in Durchgangsöffnungen (35) münden, die in äußeren ringförmigen Rippenkörpern (37A) des Ofens bereitgestellt sind.

5. Magnetinduktionsofen nach Anspruch 4, **dadurch gekennzeichnet, dass** jede Längsnut (43) innen gerippt ist.

6. Magnetischer Induktionsofen nach Anspruch 1, **dadurch gekennzeichnet, dass** die Permanentmagnete (27) mit Streifenanordnungen (37) zusammenwirken, die an den Seiten davon an den gegenüberliegenden Seiten (1A, 1B) des Ofens angeordnet sind, wobei die Streifen (37) den von den Hilfspermanentmagneten (27B) erzeugten axialen Strom verschließen und die von der Gesamtheit der Permanentmagnete (27) abgegebene Wärme durch Konduktion axial zu den gerippten Ringkörpern (37A) übertragen, die an den gegenüberliegenden Seiten (1A, 1B) vorhanden sind, um Wärme nach außerhalb des Ofens (1) abzuleiten.

7. Magnetischer Induktionsofen nach Anspruch 4 und 6, **dadurch gekennzeichnet, dass** die Streifen (37) Öffnungen (35A) aufweisen, die perfekt mit den Längsnuten (43) der Ausgleichselemente und mit den Durchgangsöffnungen (35) der äußeren ringförmigen Rippenkörper (37A) ausgerichtet sind.

8. Magnetischer Induktionsofen nach Anspruch 1 und 7, **dadurch gekennzeichnet, dass** er Lüfter (100) umfasst, die extern mit dem feststehenden Körper (16) des Ofens assoziiert und angepasst sind, um eine Luftstromschaufel zu erzeugen, die die Rippenkörper (37A), aber nicht den Hohlraum (10) des Ofens berührt, wobei die Luft in die Öffnungen (35, 35A) der äußeren ringförmigen Rippenkörper (37A), der Streifen (37) und in die Längsnuten (43) der Ausgleichselemente (42) eindringt.

9. Magnetischer Induktionsofen nach Anspruch 8, **dadurch gekennzeichnet, dass** an den Öffnungen (35) der äußeren ringförmigen Rippenkörper (37A) Strömungsablenker vorhanden sind, die angepasst sind, um die Luft in die Längsnuten (43) zu leiten.

10. Magnetischer Induktionsofen nach Anspruch 1, **dadurch gekennzeichnet, dass** an den ersten Endteilen (38, 70) der Haupt- und Hilfspermanentmagnete (27A, 27B), die den inneren Hohlraum (10) des Ofens begrenzen, ein rohrförmiger zylindrischer Körper (29) vorhanden ist, der zumindest teilweise aus keramischem Material gefertigt und angepasst ist, um als Abschirmung für die von dem Knüppel (5) abgegebene Wärme zu wirken, wenn dieser Knüppel dem Magnetfluss ausgesetzt ist, der von den Permanentmagneten (27) des sich um die Längsachse (W) drehenden Rotorkörpers (26) erzeugt wird, wobei der rohrförmige zylindrische Körper (29) abnehmbar und auswechselbar ist.

11. Magnetischer Induktionsofen nach Anspruch 1, **dadurch gekennzeichnet, dass** der elektrische Rotor (25) einstückig mit einem Umfangsabschnitt des Rotorkörpers (26) verbunden ist, wobei der Rotorkörper (26) außen Rippen (30) für Kühlhohlräume (19) aufweist, die zwischen ihnen, dem feststehenden Körper (16) des Ofens, dem elektrischen Stator (23) und dem elektrischen Rotor (25) vorhanden sind.

12. Magnetischer Induktionsofen nach Anspruch 11, **dadurch gekennzeichnet, dass** der Rotorkörper (26) - außen - eine Vielzahl von Rippen (33) in den Hohlräumen (19) zwischen ihnen und dem feststehenden Körper (16) des Ofens, dem Stator (23) und dem elektrischen Rotor (25) aufweist, wobei die Rippen angepasst sind, um den in diesen Hohlräumen (19) vorhandenen Luftstrom zu verstärken und zu den Öffnungen (18) zu bewegen, die in Flanschen (17) bereitgestellt sind, die seitlich an dem feststehenden Ofenkörper (16) angeordnet sind.

13. Magnetischer Induktionsofen nach Anspruch 1, **dadurch gekennzeichnet, dass** der Hohlraum (10) des Ofens (1) durch mehrere Vielzahlen von Permanentmagneten (27) begrenzt ist, wobei jede Vielzahl von Magneten einen Teil des Hohlraums (10) begrenzt, wobei die Vielzahl von Permanentmagneten (27) in dem Ofen (1) in Längsrichtung angrenzend angeordnet und magnetisch zueinander ausgerichtet sind, zwischen zwei Vielzahlen von in Längsrichtung aufeinanderfolgenden Permanentmagneten (27) der Vielzahlen von Permanentmagneten (27) entsprechende ringförmige Abstandhalter (47) vorhanden sind, die in Ebenen orthogonal zu der Längsachse (W) des Rotors (25) angeordnet sind.

14. Magnetischer Induktionsofen nach Anspruch 1, **dadurch gekennzeichnet, dass** eine Umwälzung eines Kühlmittels um den Stator (23) des Elektromotors (21) in dem feststehenden Körper (16) des Ofens bereitgestellt ist.

## Revendications

1. Four à induction magnétique (1) conçu pour le chauffage de billettes métalliques solides ou tubulaires (5) en matériaux non ferreux destinées à l'extrusion, ledit four (1) comprenant un corps fixe ou une carcasse cylindrique et tubulaire (16) renfermant un moteur électrique (21) qui comporte un stator électrique fixe (23) et un rotor annulaire (25) mobile en rotation autour d'un axe longitudinal (W) de celui-ci dans ledit stator (23) et dans ledit corps fixe (16), ledit rotor annulaire (25) étant intégralement relié à un corps de rotor ou support tubulaire (26) qui prend en charge une pluralité d'aimants permanents (27) disposés de manière à définir une cavité (10) du four (1) ayant un axe longitudinal qui coïncide avec l'axe de rotation (W) du rotor et adaptée pour contenir au moins une billette (5) destinée à être chauffée, par induction magnétique, par la rotation du rotor annulaire et du corps de rotor (26) auquel il est relié, toute rotation de ladite billette (5) autour de son axe longitudinal étant totalement empêchée lorsque la billette est insérée dans la cavité (10) susmentionnée, la billette (5) restant dans cet état pendant toute la durée de l'opération de chauffage, la pluralité d'aimants permanents (27) du corps de rotor (26) comprenant des aimants permanents principaux (27A) aimantés de manière radiale dans le corps de rotor (26) et des aimants permanents auxiliaires (27B) aimantés de manière axiale autour de la cavité (10) du rotor, lesdits aimants permanents principaux et auxiliaires (27A, 27B) s'alternant dans ledit corps de rotor (26) autour de la cavité (10) du four, **caractérisé en ce que** les aimants permanents principaux (27A) sont polarisés à 90° par rapport à la polarisation des aimants permanents auxiliaires (27B), les pôles identiques desdits aimants permanents principaux (27A) et desdits aimants permanents auxiliaires (27B) tournés vers ladite cavité (10) du four étant disposés de manière adjacente, lesdits aimants permanents principaux (27A) formant des segments ou des parties de section circulaire autour de ladite cavité (10) du four, lesdits aimants permanents présentant une première partie d'extrémité intérieure (38) tournée vers la cavité (10) du four, consécutive à une première partie d'extrémité intérieure correspondante (70) des aimants permanents auxiliaires (27B), une deuxième partie d'extrémité extérieure (39) des aimants permanents principaux (27A) reposant sur ledit corps de rotor (26), ladite partie d'extrémité extérieure correspondante (40) des aimants permanents auxiliaires (27B) étant éloignée dudit corps de rotor (26), une cavité (41) étant présente entre ledit corps de rotor (26) et la partie d'extrémité extérieure (40) des aimants permanents auxiliaires (27B).

2. Four à induction magnétique selon la revendication 1, **caractérisé en ce que** chaque aimant permanent principal (27A) est soit constitué d'une seule pièce, soit composé d'une pluralité d'aimants couplés.

3. Four à induction magnétique selon la revendication 1, **caractérisé en ce que** ladite cavité (41) située entre les aimants permanents auxiliaires (27B) et le corps de rotor (26) contient un élément compensateur (42) réalisé en un matériau thermoconducteur.

4. Four à induction magnétique selon la revendication 3, **caractérisé en ce que** chaque élément compensateur (42) comporte une rainure longitudinale (43), les rainures longitudinales de tous les éléments compensateurs (42) du corps de rotor (26) débouchant à l'extérieur dudit corps de rotor (26) sur des côtés opposés (1A, 1B) du four à induction (1) au niveau d'ouvertures débouchantes (35) aménagées dans des corps annulaires à ailettes extérieurs (37A) dudit four.

5. Four à induction magnétique selon la revendication 4, **caractérisé en ce que** chaque rainure longitudinale (43) comporte des ailettes à l'intérieur.

6. Four à induction magnétique selon la revendication 1, **caractérisé en ce que** les aimants permanents (27) coopèrent avec des ensembles de bandes (37) disposés sur leurs côtés, au niveau des faces opposées (1A, 1B) du four, lesdites bandes (37) confinant le flux axial généré par les aimants permanents auxiliaires (27B) et transférant de manière axiale, par conduction, la chaleur émise par l'ensemble desdits aimants permanents (27) vers les corps annulaires à ailettes (37A) présents sur ces côtés opposés (1A, 1B) pour dissiper la chaleur à l'extérieur du four (1).

7. Four à induction magnétique selon les revendications 4 et 6, **caractérisé en ce que** lesdites bandes (37) comportent des ouvertures (35A) parfaitement alignées avec les rainures longitudinales (43) des éléments compensateurs et avec les ouvertures débouchantes (35) des corps annulaires à ailettes extérieurs (37A).

8. Four à induction magnétique selon les revendications 1 et 7, **caractérisé en ce qu'**il comprend des ventilateurs (100) associés à l'extérieur au corps fixe (16) du four, adaptés pour générer un flux d'air qui vient en contact avec lesdits corps à ailettes (37A), mais non avec la cavité (10) du four, ledit air pénétrant dans les ouvertures (35, 35A) desdits corps annulaires à ailettes extérieurs (37A), desdites bandes (37) et dans lesdites rainures longitudinales (43) des éléments compensateurs (42) .

9. Four à induction magnétique selon la revendication 8, **caractérisé en ce que**, au niveau des ouvertures (35) des corps annulaires à ailettes extérieurs (37A), se trouvent des déviateurs de flux adaptés pour diriger ledit air dans les rainures longitudinales (43).

10. Four à induction magnétique selon la revendication 1, **caractérisé en ce qu'**au niveau des premières extrémités (38, 70) des aimants permanents principaux et auxiliaires (27A, 27B) délimitant la cavité interne (10) du four, se trouve un corps cylindrique tubulaire (29) constitué au moins en partie d'un matériau céramique, adapté pour servir d'écran à la chaleur émise par la billette (5) lorsque celle-ci est soumise au flux magnétique généré par les aimants permanents (27) du corps de rotor (26) tournant autour de l'axe longitudinal (W), ledit corps cylindrique tubulaire (29) étant amovible et remplaçable.

11. Four à induction magnétique selon la revendication 1, **caractérisé en ce que** le rotor électrique (25) est intégralement relié à une partie circonférentielle du corps de rotor (26), ledit corps de rotor (26) comportant, à l'extérieur, des nervures (30) destinées à refroidir les cavités (19) présentes entre elles, le corps fixe (16) du four, le stator électrique (23) et le rotor électrique (25).

12. Four à induction magnétique selon la revendication 11, **caractérisé en ce que** ledit corps de rotor (26) comporte, à l'extérieur, une pluralité d'ailettes (33) dans les cavités (19) situées entre celui-ci et le corps fixe (16) du four, du stator (23) et du rotor électrique (25), lesdites ailettes étant adaptées pour augmenter et diriger le flux d'air présent dans ces cavités (19) vers les ouvertures (18) prévues dans des brides (17) disposées de manière latérale sur le corps fixe (16) du four.

13. Four à induction magnétique selon la revendication 1, **caractérisé en ce que** la cavité (10) du four (1) est délimitée par plusieurs ensembles d'aimants permanents (27), chaque ensemble d'aimants délimitant une partie de ladite cavité (10), lesdits ensembles d'aimants permanents (27) étant disposés de manière adjacente dans le sens de la longueur et étant en phase magnétique les uns par rapport aux autres dans ledit four (1), entre deux pluralités d'aimants permanents (27) disposés longitudinalement de manière consécutive parmi les pluralités d'aimants permanents (27) étant présents et correspondants à des entretoises annulaires (47) disposées sur des plans orthogonaux à l'axe longitudinal (W) du rotor (25).

14. Four à induction magnétique selon la revendication 1, **caractérisé en ce qu'**il comprend, dans le corps fixe (16) du four, un circuit de circulation d'un réfrigérant autour du stator (23) du moteur électrique (21).
